(19) Europäisches Patentamt
European Patent Office
Office européen des brevets

(11) Veröffentlichungsnummer: **0 033 826**
**B1**

# (12) EUROPÄISCHE PATENTSCHRIFT

(45) Veröffentlichungstag der Patentschrift: **07.03.84**

(51) Int. Cl.³: **C 08 G 79/04**, C 08 G 63/68

(21) Anmeldenummer: **81100029.8**

(22) Anmeldetag: **07.01.81**

**(54) Thermoplastische aromatische Polyphosphonatocarbonate mit verbesserter thermischer Alterungsbeständigkeit, ihre Herstellung und Verwendung.**

(30) Priorität: **19.01.80 DE 3001863**

(43) Veröffentlichungstag der Anmeldung: **19.08.81 Patentblatt 81/33**

(45) Bekanntmachung des Hinweises auf die Patenterteilung: **07.03.84 Patentblatt 84/10**

(84) Benannte Vertragsstaaten: **DE FR GB IT NL**

(56) Entgegenhaltungen:
**EP - A - 0 008 823**
**DD - A - 32 300**
**DE - A - 2 751 585**
**DE - B - 1 199 499**
**US - A - 3 271 329**

(73) Patentinhaber: **BAYER AG, Konzernverwaltung RP Patentabteilung, D-5090 Leverkusen 1 Bayerwerk (DE)**

(72) Erfinder: **Schmidt, Manfred, Dr., Bodelschwinghstrasse 20, D-4150 Krefeld (DE)**
Erfinder: **Bottenbruch, Ludwig, Dr., Woehlerstrasse 5, D-4150 Krefeld (DE)**
Erfinder: **Freitag, Dieter, Dr., Hasenheide 10, D-4150 Krefeld (DE)**

**EP 0 033 826 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Thermoplastische aromatische Polyphosphonatocarbonate mit verbesserter thermischer Alterungsbeständigkeit, ihre Herstellung und Verwendung

Gegenstand der vorliegenden Erfindung ist ein Verfahren zur Herstellung von aromatischen thermoplastischen Polyphosphonatocarbonaten mit mittleren Molekulargewichten (Zahlenmittel $\overline{M}_n$) von 11.000 bis 200.000 durch Umesterung von mindestens einem Phosphonsäurediarylester und Diarylcarbonaten mit mindestens einem Diphenol in der Schmelze bei Temperaturen zwischen 80°C und 340°C in sauerstoff-freier Gasatmosphäre bei Atmosphärendruck oder vermindertem Druck zwischen 800 mbar und 0,133 mbar, — wobei das Molverhältnis von Diarylcarbonat zu Phosphonsäurediarylester zwischen 5 zu 95 und 95 zu 5 liegt und das Molverhältnis der Mole an Diphenolen zur Summe der Mole aus Diarylcarbonat und Phosphonsäurediarylester zwischen 0,91 und 0,99 liegt —, das dadurch gekennzeichnet ist, dass als Umesterungskatalysator in Mengen zwischen $10^{-7}$ bis $2.10^{-2}$ Mol-%, pro Mol eingesetzter Diphenole, mindestens einer aus der Gruppe

a) der $C_1$-$C_{18}$-Tetraalkyltitanate,
b) der $C_2$-$C_4$-Dialkylzinnoxide,
c) der $C_2$-$C_4$-Dialkyl-$C_1$-$C_4$-dialkoxyzinnverbindungen,
d) der $C_3$-$C_4$-Tetraalkylzirkonate,
e) der $C_2$-$C_{18}$-Trialkylvanadylate oder
f) der Gemische aus Germaniumdioxid oder Titandioxid mit mindestens einem der Gruppe a) bis e) im Gewichtsverhältnis 1:3 bis 3:1 eingesetzt wird, wobei der Reinheitsgrad alle für die Umesterung eingesetzten Ausgangsmaterialien > 99,1 Gew.-% sein soll.

Das Molverhältnis von Diarylcarbonat zu Phosphonsäurediarylester liegt vorzugsweise zwischen 15 zu 85 und 85 zu 15, und das Molverhältnis der Diphenole zu der Summe der Diarylcarbonate und Phosphonsäurediarylester vorzugsweise bei 0,93 bis 0,97.

Gegenstand der vorliegenden Erfindung ist auch ein Verfahren zur Herstellung von aromatischen thermoplastischen Polyphosphonatocarbonaten wie vorstehend beschrieben, das zusätzlich dadurch gekennzeichnet ist, dass die Phosphonsäurediarylester/Diarylcarbonat-Gemische mit Diphenolen in Gegenwart von 0,05 bis 3 Mol-%, bezogen auf 100 Mol-% Phosphonsäurediarylester/Diarylcarbonat-Gemisch, an Triarylphosphaten und/oder in Gegenwart von 0,05 bis 3 Mol-%, bezogen auf 100 Mol-% Diphenole an Verbindungen mit 3 oder mehr als 3 phenolischen Hydroxygruppen umgesetzt werden, mit der Massgabe, dass die Summe aus verzweigenden Triarylphosphaten und verzweigenden phenolischen Verbindungen maximal 3 Mol-% beträgt.

Die nach dem erfindungsgemässen Verfahren hergestellten thermoplastischen aromatischen Polyphosphonatocarbonate zeigen eine wesentlich verbesserte thermische Alterungsbeständigkeit als Polyphosphonatocarbonate, die nach dem Verfahren der Schmelzumesterung in Gegenwart von alkalischen Katalysatoren hergestellt werden, wobei am Ende der Polykondensation der basische Katalysator neutralisiert wurde.

Überraschenderweise wurde gefunden, dass man die thermische Alterungsbeständigkeit dieser thermoplastischen aromatischen Polyphosphonatocarbonate wesentlich verbessern kann, wenn man anstelle der alkalischen Umesterungskatalysatoren $10^{-7}$ bis $2.10^{-2}$ Mol-%, vorzugsweise $7.10^{-6}$ bis $5.10^{-3}$ Mol-%, pro Mol eingesetzter Diphenole, an speziellen, neutralen Umesterungskatalysatoren verwendet, wodurch der technische Anwendungsumfang der thermoplastischen aromatischen Polyphosphonatocarbonate bedeutend erweitert wird.

Die Reaktionstemperaturen liegen vorzugsweise zwischen 100°C und 320°C; unter vermindertem Druck sind Drücke zwischen 800 mbar und 0,133 mbar, vorzugsweise zwischen 465 mbar und 1,33 mbar zu verstehen. Die Reaktionszeit pro Mol-Ansatz ist im allgemeinen 6 - 10 Stunden.

Erfindungsgemäss geeignete neutrale Umesterungskatalysatoren sind:

a) $C_1$ bis $C_{18}$-Tetraalkyltitanate wie beispielsweise
Titan-tetraethylat
Titan-tetrapropylat,
Titan-tetraisopropylat,
Titan-tetrabutylat,
Titan-tetraoctonat,
Titan-tetrastearat,

b) $C_2$ bis $C_4$-Dialkylzinnoxide wie beispielsweise
Di-isopropylzinnoxid
Dibutylzinnoxid

c) $C_2$ bis $C_4$-Dialkyl-$C_1$-$C_4$-dialkoxy-zinnverbindungen wie beispielsweise
Diisopropyl-dimethoxy-zinn,
Dibutyl-diisopropoxy-zinn,
Dibutyl-dimethoxy-zinn

d) $C_3$ bis $C_{18}$-Tetraalkylzirkonate wie beispielsweise
Zirkon-tetraacetylacetonat,
Zirkontetrabutylat,
Zirkontetraoctonat,
Zirkontetrastearat

e) $C_2$-$C_{18}$-Trialkylvanadylate wie beispielsweise
Vanadyl-ethlat, VO $(OC_2H_5)_3$,
Vanadyl-isopropylat, VO $(O\text{-}i\text{-}C_3H_7)_3$,
Vanadyl-n-butylat, VO $(O\text{-}n\text{-}C_4H_9)_3$, sowie

f) Gemische aus Germaniumdioxid oder Titandioxid mit mindestens einem der unter a) bis e) aufgeführten Katalysatoren.

Die gemäss f) einsetzbaren Katalysatorkombinationen liegen im Gewichtsverhältnis 1 : 3 bis 3 : 1 vor.

Die nach dem erfindungsgemässen Verfahren hergestellten thermoplastischen aromatischen Polyphosphonatocarbonate mit mittleren Molekulargewichten (Zahlenmittel $\overline{M}_n$) von 11.000 bis 200.000 und insbesondere von 20.000 bis 80.000 entsprechen der Formel (1)

$$E\text{-}O\text{-}X\text{-}O\text{-}[M\text{-}O\text{-}X\text{-}O]_n\ E \qquad (1)$$

worin

E H oder -M-O-Ar ist, wobei Ar ein Arylrest mit vorzugsweise 6 bis 14 C-Atomen, insbesondere Phenyl, $C_1$-$C_4$-alkylsubstituiertes Phenyl und/oder halogensubstituiertes (Halogen = F, Cl, Br) Phenyl ist,

M das Bindeglied $-\underset{\underset{O}{\parallel}}{C}-$ oder $-\overset{R}{\overset{|}{\underset{\underset{O}{\parallel}}{P}}}-$ ist, wobei das molare Verhältnis der Bindeglieder $-\underset{\underset{O}{\parallel}}{C}-$ und $-\overset{R}{\overset{|}{\underset{\underset{O}{\parallel}}{P}}}-$ im Mittel jeweils zwischen 5 : 95 und 95 : 5, vorzugsweise zwischen 15 : 85 und 85 : 15, liegt und R = mindestens einen der Reste:

$C_1$-$C_{12}$-Alkyl,
$C_2$-$C_{12}$-Alkenyl
$C_6$-$C_{30}$-Cycloalkyl, Cycloalkenyl, Aryl, $C_7$-$C_{30}$-Arylalkyl oder $C_8$-$C_{30}$-Arylalkenyl, wobei die jeweilige Arylgruppe nicht substituiert oder durch 1-5 $C_1$-$C_4$-Alkylgruppen oder durch 1-5 Halogenatome (wie beispielsweise F, Cl oder Br) oder durch die genannten Alkylgruppen und Halogenatome substituiert ist;

X der Rest eines Diphenols ist und bedeuten kann:

Phenylen 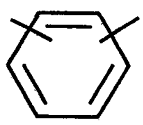

Biphenylen 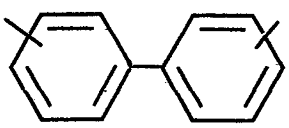

$C_2$-$C_4$-Alkylbisphenylen

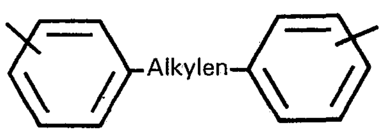

$C_1$-$C_5$-Alkylidenbisphenylen

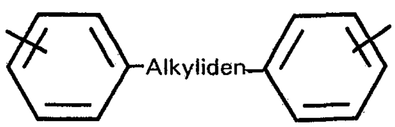

$C_5$-$C_{12}$-Cycloalkylenbisphenylen

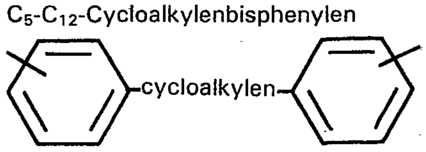

$C_5$-$C_{12}$-Cycloalkylidenbisphenylen

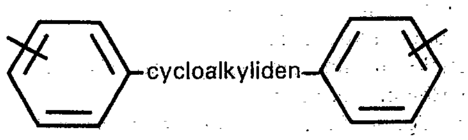

Thiobisphenylen 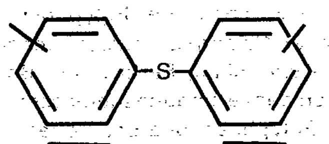

Oxibisphenylen 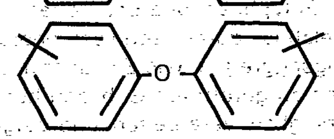

Sulfonylbisphenylen 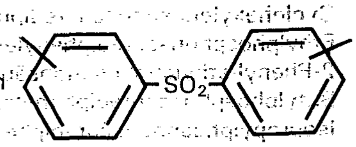

Carbonylbisphenylen 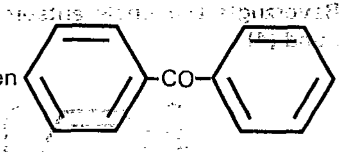

Naphthylen 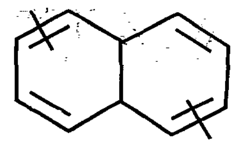

wobei jeder Phenylkern unsubstituiert oder durch 1-4 $C_1$-$C_4$-Alkylgruppen oder durch 1-4 Halogenatome (F, Cl oder Br) oder durch die genannten Alkylgruppen und Halogenatome und der Naphthylenkern unsubstituiert oder durch 1-6 mindestens einer der genannten Gruppen oder Halogenatome substituiert ist;

n der mittlere Polymerisationsgrad ist, der aus den jeweiligen Molekulargewichten $\overline{M}_n$ (Zahlenmittel) von 11.000 bis 200.000 und insbesondere 20.000 bis 80.000, der Polyphosphonatocarbonate resultiert.

Die erfindungsgemäss erhältlichen Polyphosphonatocarbonate können jeweils sowohl aus einheitlichen Diphenol-Resten X als auch aus verschiedenen, also 2 oder mehr als 2 verschiedenen Diphenolresten X, aufgebaut sein. Vorzugsweise haben vorstehende Definitionen folgende Bedeutung:

R = mindestens einen der Reste Methyl oder Phenyl, insbesondere Methyl

X = mindestens einen der Reste Phenylen, Biphenylen, $C_2$-$C_4$-Alkylenbisphenylen, $C_1$-$C_5$-Alkylidenbisphenylen wobei jeder Phenylenkern durch 1 bis 4 Methylgruppen substituiert sein kann, Cyclohexylenbisphenylen, Cyclohexylidenbis-phenylen, Thiobisphenylen, Sulfonylbisphenylen; insbesondere $C_1$-$C_4$-Alkylidenbisphenylen, wobei jeder Phenylkern durch ein oder zwei Methylgruppen substituiert sein kann

Ar = Phenyl oder p-Tolyl.

Erfindungsgemäss geeignete Phohphonsäurediarylester sind solche der Formel (2)

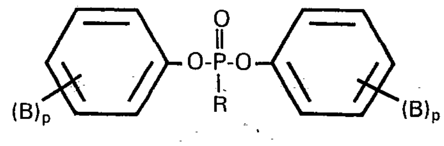

wobei R die für die Verbindungen der Formel (1) genannte Bedeutung hat,

B = eine $C_1$-$C_4$-Alkylgruppe und/oder F, Cl oder Br, und

p = 0 oder eine ganze Zahl von 1-5 sind.

Besonders bevorzugt werden halogenfreie Alkyl- und Arylphosphonsäurediphenylester; insbesondere bevorzugt werden Methylphosphonsäurediphenylester und Phenylphosphonsäurediphenylester.

Weitere Beispiele für erfindungsgemäss geeignete Phosphonsäurediarylester sind

Cyclohexylphosphonsäurediphenylester,
Ethylphosphonsäurediphenylester,
2-Phenyl-ethylenphosphonsäurediphenylester,
Butylphosphonsäurediphenylester und
Isopropylphosphonsäurediphenylester.

Bevorzugte Diphenole entsprechen den Formeln (3) und (4)

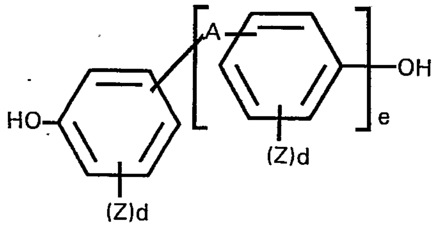
(3)

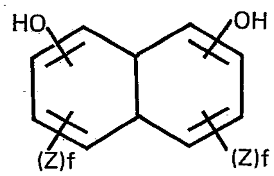
(4)

in denen

A eine Einfachbindung, eine Alkylengruppe mit 2 bis 4 C-Atomen, eine Alkylidengruppe mit 1 bis 5 C-Atomen, eine Cycloalkylengruppe mit 5 bis 6 C-Atomen, eine Cycloalkylidengruppe mit 5 bis 6 C-Atomen, eine Sulfonylgruppe, eine Carbonylgruppe, Sauerstoff oder Schwefel,

e die Zahl 0 oder 1,

Z F, Cl, Br oder $C_1$-$C_4$-Alkyl bedeutet und mehrere Z in einem Arylrest gleich oder verschieden sind,

d die ganzen Zahlen 0 oder 1 bis 4,

f die ganzen Zahlen 0 oder 1 bis 3 bdeuten.

Besonders bevorzugt sind Verbindungen der Formel (3), in denen e = 1 und A eine Einfachbindung, den Isopropylidenrest, die $SO_2$-Gruppe oder Schwefel sowie d = null bedeuten, insbesondere jedoch
4,4'-Dihydroxydiphenyl,
2,2-Bis(4-hydroxyphenyl)-propan (= Bisphenol A) und
4,4'-Dihydroxydiphenylsulfon.

Erfindungsgemäss geeignete Diarylcarbonate entsprechen der Formel (5)

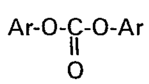
(5)

worin Ar die für die Formel (1) genannte Bedeutung hat und bevorzugt Ar- 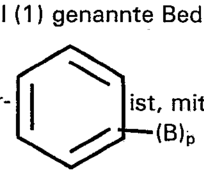 ist, mit B und p entsprechend der Bedeutung für Formel (2).

Bevorzugt geeignet sind beispielsweise Diphenylcarbonat oder Di-(p-tolyl)-carbonat. Insbesondere wird Diphenylcarbonat bevorzugt.

Die nach dem erfindungsgemässen Verfahren erhaltenen hochmolekularen thermoplastischen aromatischen Polyphosphonatcarbonate können durch den Einbau von Mengen zwischen 0,05 und 3,0 Mol-% (bezogen auf 100 Mol-% eingesetzter Diphenole) an Verbindungen mit 3 oder mehr als 3 phenolischen Hydroxygruppen verzweigt sein. Statt oder zusammen mit diesen dreifunktionellen Verzweigungskomponenten können ebenfalls Triarylphosphate wie beispielsweise Triphenylphosphat in Mengen zwischen 0,05 und 3,0 Mol-% (bezogen auf 100 Mol-% des eingesetzten Gemisches aus Diarylcarbonat und Phosphonsäurediarylester) einkondensiert werden, wodurch das resultierende aromatische Polyphosphonatocarbonat durch Phosphorsäureestergruppen verzweigt wird. Die Summe aus verzweigenden Triarylphosphaten und verzweigenden phenolischen Verbindungen kann maximal 3 Mol-% betragen.

Einige der verwendbaren verzweigenden phenolischen Verbindungen mit 3 oder mehr als drei phenolischen Hydroxygruppen sind beispielsweise Phloroglucin, 4,6-Dimethyl-2,4,6-tri-(4-hydroxy-phenyl)-hepten-2, 4,6-Dimethyl-2,4,6-tri-(4-hydroxy-phenyl)-heptan, 1,3,5-Tri-(4-hydroxyphenyl)-benzol, 1,1,1-Tri-(4-hydroxyphenyl)-ethan, Tri-(4-hydroxy-phenyl)-phenylmethan, 2,2-Bis-[4,4-bis-(4-hydroxy-phenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan und 1,4-Bis-(4,4''-dihydroxytriphenyl-methyl)-benzol.

Alle für die Umesterung eingesetzten Ausgangsmaterialien sollen einen Reinheitsgrad von > 99,1 Gew.-%, vorzugsweise > 99,6 Gew.-% besitzen.

Zur Durchführung des erfindungsgemässen Verfahrens werden beispielsweise Gemische aus 5 bis 95 Mol-% an Phosphonsäurediarylestern der Formel (2) und 95 bis 5 Mol-% an Diarylcarbonat der Formel (5) mit 91 bis 99 Mol-%, insbesondere mit 93 bis 97 Mol-% an Diphenolen in Anwesenheit von $10^{-7}$ bis $2.10^{-2}$ Mol-% insbesondere von $7.10^{-6}$ bis $5.10^{-3}$ Mol-% (bezogen jeweils auf 1 Mol Diphenol), eines der erfindungsgemässen neutralen Umesterungskatalysatoren bei Temperaturen zwischen 80°C und 340°C, vorzugsweise zwischen 100°C und 320°C und unter Einleiten von Inertgas wie beispielsweise Stickstoff sowie bei Drücken zwischen 800 mbar und 0,133 mbar, vorzugsweise bei Drücken zwischen 465 mbar und 1,33 mbar zur Reaktion gebracht.

Unter Abdestillieren der flüchtigen aromatischen Monohydroxyaryle bei erhöhter Temperatur, vorzugsweise im Vakuum, wird die Reaktion unter Einleiten von Inertgas so lange weitergeführt, bis der gewünschte Kondensationsgrad erreicht ist.

Ausser Stickstoff sind als Inertgas noch Kohlendioxid oder Helium verwendbar.

Nach Beendigung der Polykondensation wird die gebildete Schmelze des Polyphosphonatocarbonats in üblicher Weise in Granulate oder direkt in geformte Gebilde wie Filme, Fasern oder Borsten überführt. Die nach dem erfindungsgemässen Verfahren erhaltenen Polyphosphonatocarbonate lassen sich im Schmelzfluss durch technisch gebräuchliche Verarbeitungsaggregate wie Extruder und Spritzgussmaschinen zu geformten Gebilden hoher Wärmeformbeständigkeit verarbeiten und zeigen neben einer

hervorragenden Brandwidrigkeit und guten mechanischen Eigenschaften eine deutlich verbesserte thermische Alterungsbeständigkeit im Vergleich zu solchen Polyphosphonatocarbonaten, die nach dem gleichen Verfahren jedoch im Gegenwart von alkalischen Umesterungskatalysatoren hergestellt wurden.

So zeigt beispielsweise ein nach dem beanspruchten Verfahren durch Umesterung in Gegenwart von $2,9.10^{-3}$ Mol-% Titantetrabutylat hergestelltes Polyphosphonatocarbonat auf Basis von

80,15 Mol-% Diphenylcarbonat,
19,85 Mol-% Methylphosphonsäurediphenylester,
75,56 Mol-% Bisphenol A und
18,87 Mol-% 4,4'-Dihydroxydiphenylsulfon,

das eine relative Lösungsviskosität von $\eta rel = 1,356$ besitzt (gemessen in 0,5 Gew.-%iger Lösung in Methylenchlorid bei 25 °C) nach 10tägiger Lagerung an Luft bei 100 °C keine Verminderung der relativen Lösungsviskosität (vgl. Beispiel 2). Ein Polyphosphonatocarbonat aus den gleichen Ausgangsprodukten, das jedoch durch Umesterung in Gegenwart von $7,2.10^{-3}$ Mol-% Natriumphenolat hergestellt wurde (s. Vergleichsbeispiel 2), wobei am Ende der Polykondensation das Natriumphenolat durch eine äquivalente Menge Diethylsulfat neutralisiert wurde, und das eine relative Lösungsviskosität von 1,360 besitzt, zeigt nach 10tägiger Lagerung bei 100 °C an Luft einen Abfall der relativen Lösungsviskosität auf $\eta rel = 1,302$.

Die erfindungsgemäss erhältlichen Polyphosphonatocarbonate sind löslich in Methylenchlorid, 1,1,2,2-Tetrachlorethan, Chlorbenzol, 1,2-Dichlorbenzol, Chloroform, 1,1,2-Trichlorethylen, Dioxan und Hexamethylen-phosphortriamid (HMPT), mit Ausnahme der Polyphosphonatocarbonate der Struktur (1), in denen X der Thio-bis-phenylen-Rest ist.

Den erfindungsgemäss erhältlichen aromatischen Polyphosphonatocarbonaten können ausserdem die für Polycarbonate üblichen Materialien wie Pigmente, antistatische Mittel, Formtrennmittel, thermische Stabilisatoren, Ultraviolettlichtstabilisatoren und/oder verstärkende Füllstoffe zugemischt werden.

Die erfindungsgemäss erhältlichen thermoplastischen aromatischen Polyphosphonatocarbonate können bei 240 °C bis 320 °C extrudiert und zu Prüfkörpern ausgeformt werden.

Die Prüfung der Wärmeformbeständigkeit erfolgte durch Messung des Vicat-Erweichungspunktes VSP gemäss DIN 53 460 oder ISO/R 75. Die Prüfung des Verhaltens bei Schlagbeanspruchung erfolgte sowohl durch Messung der Schlagzähigkeit $a_n$ nach Charpy gemäss DIN 53 453 oder nach ASTM D 256 als auch durch Messung der Kerbschlagzähigkeit $a_k$ nach Charpy gemäss DIN 53 453 oder ASTM D 256. Die Härtemessung erfolgte durch Messung der Kugeldruckhärte HK gemäss DIN 53 456. Die Prüfung der mechanisch-elastischen Eigenschaften erfolgte durch Spannungs-Verformungsversuche wie durch Messung des Biege-E-Moduls gemäss DIN 53 457, durch Messung des Zug-E-Moduls gemäss DIN 53 457, durch Messung der Reissfestigkeit $\delta_R$, der Reissdehnung $\epsilon_R$, der Streckfestigkeit $\delta_S$ und der Streckdehnung $\epsilon_S$ gemäss DIN 53 455/1968 oder ASTM D 638.

Die Messung der relativen Lösungsviskositäten der erfindungsgemässen Polyphosphonatocarbonate erfolgte in 0,5 Gew.-%iger Lösung in Methylenchlorid bei 25 °C.

Die Prüfung des Brandverhaltens erfolgte sowohl durch Messung des $O_2$-Index gemäss ASTM D 2863-70 als auch durch Messung der Nachbrennzeit gemäss dem UL-Test (Subj. 94).

Hierbei werden Teststäbe mit den Abmessungen: 127 × 12,7 × 1,6 mm (1/16") und 127 × 12,7 × 3,2 mm (1/8") dem Testverfahren gemäss Underwriters Laboratories, Inc. Bulletin 94, Verbrennungstest zur Klassifizierung von Materialien, unterworfen.

Gemäss diesem Testverfahren wurden die so geprüften Materialien entweder mit UL-94 V-O, UL-94 V-I und UL-94 V-II klassifiziert, und zwar auf der Basis der mit den 10 Proben erhaltenen Ergebnisse. Die Kriterien für jede dieser V-Klassifizierungen gemäss UL-94 sind kurz wie folgt:

UL-94 V-O Das durchschnittliche Flammen und/oder Glühen nach Entfernung der Zündflamme soll 5 Sekunden nicht überschreiten und keine der Proben soll Teilchen abtropfen, die absorbierende Baumwolle entzünden.

UL-94 V-I Das durchschnittliche Flammen und/oder Glühen nach Entfernung der Zündflamme soll 25 Sekunden nicht überschreiten und keine der Proben soll Teilchen abtropfen, die absorbierende Baumwolle entzünden.

UL-94 V-II Das durchschnittliche Flammen und/oder Glühen nach Entfernung der Zündflamme soll 25 Sekunden nicht überschreiten und die Proben tropfen flammende Teilchen ab, welche absorbierende Baumwolle entzünden.

Weiterhin wurde ein Teststab, der mehr als 25 Sekunden nach Entfernung der Zündflamme brannte, nicht nach UL-94 klassifiziert, sondern derselbe wurde nach den Standardbedingungen der vorliegenden Erfindung als «brennt» bezeichnet. Die Vorschrift UL-94 erfordert weiterhin, dass alle Teststäbe eines Versuchs die jeweilige V-Bewertung erfüllen müssen, anderenfalls erhalten die 10 Teststäbe die Bewertung des schlechtesten Einzelstabes. Wenn beispielsweise 1 Stab mit UL-94 V-II bewertet wird und die anderen 9 Teststäbe mit UL-94 V-O bewertet werden, dann erhalten alle 10 Stäbe die Bewertung UL-94 V-II.

*Beispiel 1*

3592 g (16,79 Mol) Diphenylcarbonat,
2068 g (8,34 Mol) Methylphosphonsäurediphenylester,
2712 g (11,89 Mol) Bisphenol A,
2214 g (11,90 Mol) 4,4'-Dihydroxydiphenyl,
7,6 g ($1,21 \cdot 10^{-2}$ Mol) 1,4-Bis-(4,4"-dihydroxytriphenylmethyl)-benzol und
0,2 g Dibutylzinnoxid ($3,38 . 10^{-3}$ Mol-%)

werden unter Stickstoff bei 230 °C intensiv verrührt. Anschliessend wird innerhalb von 3½ Stunden bei einer von 230 °C auf 280 °C ansteigenden Temperatur und einem von 400 mbar auf 10 mbar allmählich absinkendem Druck über eine auf 100 °C beheizte

Kolonne Phenol abdestilliert. Man setzt die Reaktion nochmals 2 Stunden bei 290°C bis 310°C und bei einem Druck von 0,3 mbar fort, wobei die Umdrehungszahl des Rührers auf einen konstanten Wert absinkt. Nach Belüften des Autoklaven mit Stickstoff lässt man das gebildete Polymer bei stillstehendem Rührer 1 Stunde absitzen und isoliert das Polymer anschliessend durch Abspinnen unter Druck (ca. 9,81 bar) und Granulieren des Schmelzstranges.

Man erhält 5 kg eines amorphen Polyphosphonatocarbonats mit einem Zahlenmittel-Molekulargewicht von $\overline{M}_n$ = 18.100 und einer relativen Lösungsviskosität $\eta$rel = 1,331 (gemessen bei 25°C in 0,5 Gew.-%iger Lösung in Methylenchlorid). Phosphorgehalt: 4,5%.

Glasübergangstemperatur $T_G$ = 147°C (durch Differentialthermoanalyse bestimmt).

Eine mögliche theoretische Struktur des Polyphosphonatocarbonats gemäss Beispiel 1 ist folgende:

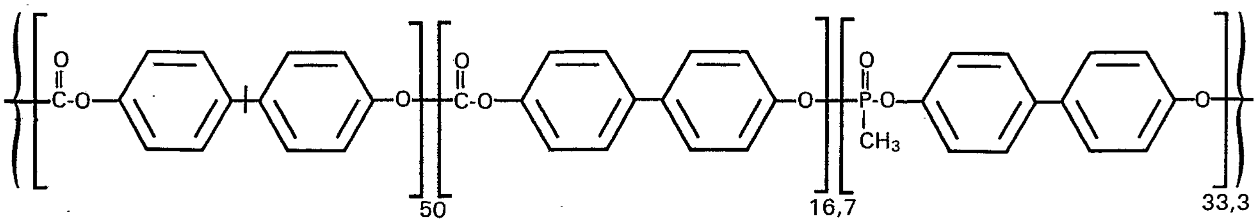

*Vergleichsbeispiel 1*

3592 g (16,79 Mol) Diphenylcarbonat,
2068 g (8,34 Mol) Methylphosphonsäurediphenylester,
2712 g (11,89 Mol) Bisphenol A,
2214 g (11,90 Mol) 4,4'-Dihydroxydiphenyl,
7,6 g (1,21 . $10^{-2}$ Mol) 1,4-Bis-(4,4''-dihydroxytriphenylmethyl)-benzol und
0,2 g (1,72 . $10^{-3}$ Mol-%) Natriumphenolat (= 7,23 . $10^{-3}$ Mol-%)

werden unter Stickstoff bei 230°C intensiv verrührt. Anschliessend wird innerhalb von 5 Stunden bei einer von 230°C auf 280°C ansteigenden Temperatur und einem von 400 mbar auf 10 mbar allmählich absinkendem Druck über eine auf 100°C beheizte Kolonne Phenol abdestilliert. Man setzt die Reaktion nochmals 5 Stunden bei 290°C bis 310°C und bei einem Druck von 0,3 mbar fort, wobei die Umdrehungszahl des Rührers auf einen konstanten Wert absinkt. Nach Belüften des Rührautoklaven mit Stickstoff werden 0,266 g (1,72 . $10^{-3}$ Mol) Diethylsulfat zugegeben, 10 Minuten verrührt und nochmals 20 Minuten im Vakuum destilliert. Dann lässt man das Polymer bei 300°C unter Stillstand des Rührers 1 Stunde absitzen und isoliert das Polymer anschliessend durch Abspinnen unter Druck (ca. 9,81 bar) und Granulieren des Schmelzstranges, wobei man 5 kg eines hochmolekularen amorphen Polyphosphonatocarbonats erhält mit einem Zahlenmittel-Molekulargewicht $\overline{M}_n$ = 17.000 und einer relativen Lösungsviskosität $\eta$rel = 1,327 (gemessen bei 25°C in einer Lösung von 0,5 g des Polymers in 100 ml Methylenchlorid). Phosphorgehalt = 4,5%.

Die durch Differentialthermoanalyse (DTA) ermittelte Glasübergangstemperatur $T_G$ des Polymers beträgt $T_G$ = 147°C.

Eine mögliche theoretische Struktur des Polyphosphonatocarbonats gemäss Vergleichsbeispiel 1 ist folgende:

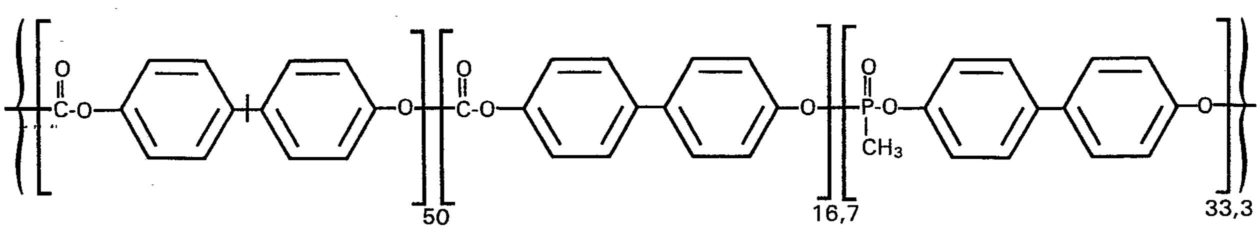

*Beispiel 2*

108 g (0,5047 Mol) Diphenylcarbonat,
31 g (0,125 Mol) Methylphosphonsäurediphenylester,
108, 5 g (0,4759 Mol) Bisphenol A,
29,7 g (0,1188 Mol) 4,4'-Dihydroxydiphenylsulfon und
10 mg (2,9 . $10^{-3}$ Mol-%) Titantetrabutylat

werden unter Stickstoff bei 230°C intensiv verrührt. Anschliessend wird innerhalb von 3½ Stunden bei einer von 230°C auf 300°C ansteigenden Temperatur und einem von 400 mbar auf 20 mbar allmählich absinkendem Druck über eine auf 100°C beheizte Kolonne Phenol abdestilliert. Man setzt die Reaktion nochmals 1 Std. bei 300°C bis 350°C und bei einem Druck von 1,0 mbar fort. Nach Belüften des Reaktionsgefässes mit Stickstoff erhält man durch Abspinnen des Polymers unter Druck (9,81 bar) ein amorphes Polyphosphonatocarbonat, das ein Zahlenmittel-Molekulargewicht von $M_n$ = 19.600 und eine relative Lösungsviskosität von $\eta$rel = 1,356 besitzt. Phosphorgehalt: 2,34%.

$T_G$ (nach DTA) = 156°C.

Eine mögliche theoretische Struktur des Polyphosphonatocarbonats gemäss Beispiel 2 ist folgende:

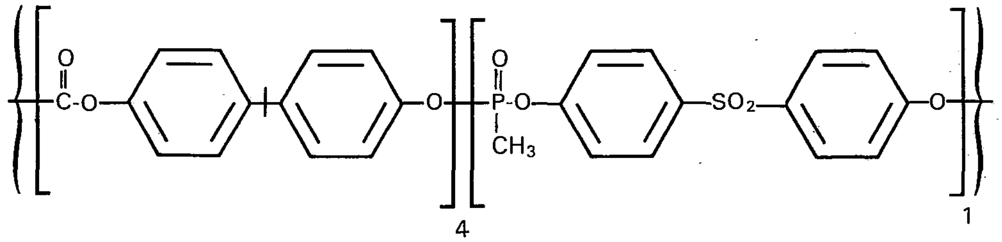

*Vergleichsbeispiel 2*

108 g (0,5047 Mol) Diphenylcarbonat,
31 g (0,1250 Mol) Methylphosphonsäurediphenylester,
108,5 g (0,4759 Mol) Bisphenol A,
29,7 g (0,1188) 4,4'-Dihydroxydiphenylsulfon und
5 mg ($7,2 \cdot 10^{-3}$ Mol-%) Natriumphenolat

werden unter Stickstoff und unter den gleichen Reaktionsbedingungen wie in Vergleichsbeispiel 1 geschildert miteinander unter Phenolabspaltung umgesetzt. Nach Beendigung der Polykondensationsreaktion werden 6,65 mg ($7,2 \cdot 10^{-3}$ Mol-%) Diethylsulfat zugegeben, 10 Min. bei 300°C verrührt und nochmals 20 Min. im Vakuum destilliert. Man isoliert das Polymer anschliessend und erhält ein Polyphosphonatocarbonat, das ein Zahlenmittel-Molekulargewicht von $\overline{M}_n$ = 19.700 und eine relative Lösungsviskosität von $\eta$rel = 1,360 besitzt.

Phosphorgehalt: 2,34%
$T_G$ (nach DTA): 156°C.

Eine mögliche theoretische Struktur des Polyphosphonatocarbonats ist die des Beispiels 2.

Aus den Polyphosphonatocarbonaten der Beispiele 1 und 2 sowie der Vergleichsbeispiele 1 und 2 wurden aus Methylenchloridlösung Folien mit einer Schichtdicke von 50 $\mu$m hergestellt und bei 100°C an Luft getempert. Nach festen Zeitabständen wurden Proben der Folien entnommen und deren relative Lösungsviskositäten in einer 0,5 Gew.-%igen Lösung in Methylenchlorid bei 25°C bestimmt. Die gemessenen $\eta$rel-Werte sind in der Tabelle 1 vergleichend zusammengefasst.

Tabelle 1

| Zeit-differenz (Tage) | $\eta$rel-Werte der Polymere aus: Beispiel 1 | Vergleichsbeispiel 1 | Beispiel 2 | Vergleichsbeispiel 2 |
|---|---|---|---|---|
| 0 | 1,331 | 1,327 | 1,356 | 1,360 |
| 2 | 1,330 | 1,315 | 1,357 | 1,348 |
| 4 | 1,331 | 1,302 | 1,356 | 1,336 |
| 5 | 1,332 | 1,295 | 1,355 | 1,330 |
| 7 | 1,330 | 1,284 | 1,356 | 1,319 |
| 10 | 1,331 | 1,265 | 1,355 | 1,302 |

Die Brandwidrigkeitswerte und mechanischen Eigenschaftswerte der Polyphosphonatocarbonate gemäss dem Beispiel 1 und dem Vergleichsbeispiel 1 sind nahezu identisch und der Tabelle 2 zu entnehmen.

Tabelle 2

| Prüfung | Prüfnorm | Prüfwerte Beispiel 1 | Vergleichsbeispiel 1 |
|---|---|---|---|
| $O_2$-Index | ASTM-2863-70 | 59% | 59% |
| UL-Test (Subj. 94) | | V-O (1/16") | V-O (1/16") |
| Vicat B-Temperatur | DIN 53 460 | 141°C | 141°C |
| Schlagzähigkeit $a_n$ | DIN 53 454 | ungebrochen | ungebrochen |
| Kerbschlagzähigkeit $a_k$ | DIN 53 453 | 21 | 20 |
| Kugeldruckhärte HK | DIN 53 456 | 110 MPa | 112 MPa |
| Biege-E-Modul | DIN 53 457 | 2400 MPa | 2300 MPa |
| Zug-E-Modul | DIN 53 457 | 2450 MPa | 2400 MPa |
| Streckfestigkeit $\delta_S$ | DIN 53 455 | 64 MPa | 66 MPa |
| Steckdehnung $\epsilon_S$ | DIN 53 455 | 9% | 9% |
| Reissfestigkeit $\delta_R$ | DIN 53 455 | 61 MPa | 61 MPa |
| Reissdehnung $\epsilon_R$ | DIN 53 455 | 60% | 59% |

*Beispiel 3*

4020 g (18,79 Mol) Diphenylcarbonat,
1552 g (6,62 Mol) Methylphosphonsäurediphenylester,
4472 g (19,61 Mol) Bisphenol A,
1108 g (5,96 Mol) 4,4'-Dihydroxydiphenyl,
7,6 g ($1,21 \cdot 10^{-2}$ Mol) 1,4-Bis-(4,4''-dihydroxytriphenylmethyl)-benzol und
0,2 g ($5,22 \cdot 10^{-4}$ Mol = $2,04 \cdot 10^{-3}$) Zirkon-n-butylat

werden analog der in Beispiel 1 geschilderten Verfahrensweise umgesetzt. Man erhält 5,1 kg eines amorphen Polyphosphonatocarbonats der theoretischen Struktur

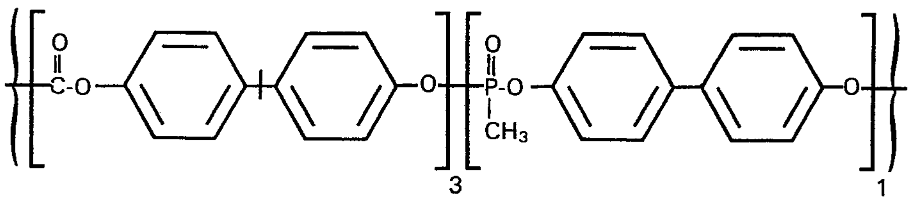

mit folgenden Analysenkenndaten:
$\overline{M}_n$ = 16.000
$\eta$rel = 1,308
Phosphorgehalt: 3,1%
$T_G$ (nach DTA): 148°C.

*Beispiel 4*

89,8 g (0,4196 Mol) Diphenylcarbonat,
51,7 g (0,2084 Mol) Methylphosphonsäurediphenylester,
0,15 g ($0.45 \cdot 10^{-3}$ Mol) Triphenylphosphat,
90,5 g (0,3969 Mol) Bisphenol A,
43,25 g (0,1984 Mol) 4,4'-Dihydroxydiphenylsulfid und
5 mg ($3,44 \cdot 10^{-3}$ Mol-%) Vanadylisopropylat

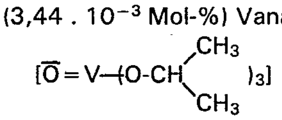

werden analog der in Beispiel 2 geschilderten Verfahrensweise umgesetzt. Das resultierende Polyphosphonatocarbonat der theoretischen Struktur

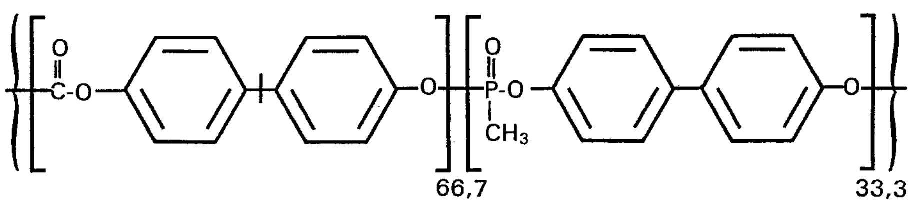

besitzt folgende Kenndaten:
$\eta$rel = 1,374
$\overline{M}_n$ = 22.600
P = 2,93%
S = 3,03%
$T_G$ (nach DTA): 120°C.

*Beispiel 5*

155,1 g (0,6254 Mol) Methylphosphonsäurediphenylester,
7,04 g (0,0329 Mol) Diphenylcarbonat,
113,6 g (0,6108 Mol) 4,4'-Dihydroxydiphenyl

und

10 mg ($5,6 \cdot 10^{-3}$ Mol-%) Dibutyl-dimethoxy-zinn werden analog der in Beispiel 2 geschilderten Verfahrensweise umgesetzt. Das resultierende Polyphosphonatocarbonat der theoretischen Struktur

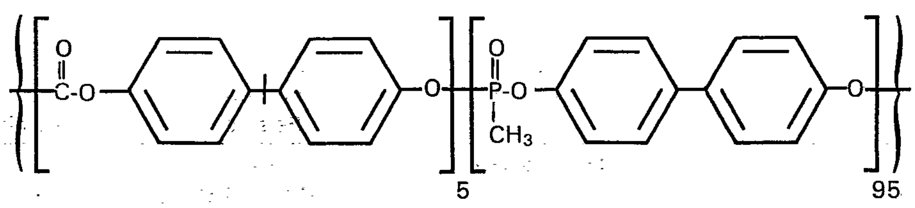

besitzt folgende Kenndaten:
$\eta$rel = 1,318
$\overline{M}_n$ = 25.700
P = 12,1%
$T_G$ (nach DTA): 139°C.

*Beispiel 6*

133,8 g (0,6254 Mol) Diphenylcarbonat,
8,16 g (0,0329 Mol) Methylphosphonsäurediphenylester,
139,3 g (0,618 Mol) Bisphenol A und
5 mg eines Gemisches aus Germaniumdioxid und Titantetrabutylat im Gewichtsverhältnis (1:1) (≙ $5,7 \cdot 10^{-3}$ Mol-%) werden analog der im Beispiel 2 geschilderten Verfahrensweise umgesetzt. Das resultierende Polyphosphonatocarbonat der theoretischen Struktur

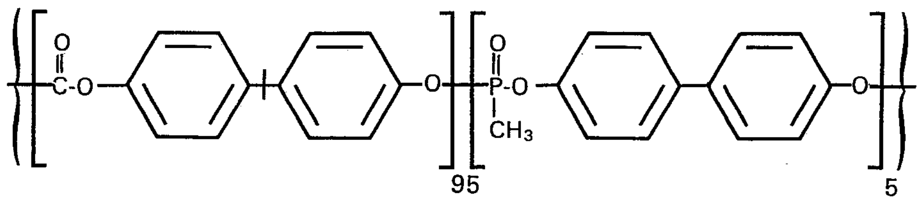

besitzt folgende Kenndaten:
$\eta rel = 1,302$
$\overline{M}_n = 24.200$
$P = 0,6\%$
$T_G$ (nach DTA): 143°C.

**Patentansprüche**

1. Verfahren zur Herstellung von aromatischen thermoplastischen Polyphosphonatocarbonaten mit mittleren Molekulargewichten (Zahlenmittel $\overline{M}_n$) von 11.000 bis 200.000 durch Umesterung von mindestens einem Phosphonsäurediarylester und Diarylcarbonaten mit mindestens einem Diphenol in der Schmelze bei Temperaturen zwischen 80°C und 340°C in sauerstoff-freier Gasatmosphäre bei Atmosphärendruck oder vermindertem Druck zwischen 800 mbar und 0,133 mbar, — wobei das Molverhältnis von Diarylcarbonat zu Phosphonsäurediarylester zwischen 5 zu 95 und 95 zu 5 liegt und das Molverhältnis der Mole an Diphenolen zur Summe der Mole aus Diarylcarbonat und Phosphonsäurediarylester zwischen 0,91 und 0,99 liegt —, dadurch gekennzeichnet, dass als Umesterungskatalysator in Mengen zwischen $10^{-7}$ bis $2.10^{-2}$ Mol-%, pro Mol eingesetzter Diphenole, mindestens einer aus der Gruppe

a) der $C_1$-$C_{18}$-Tetraalkyltitanate,
b) der $C_2$-$C_4$-Dialkylzinnoxide,
c) der $C_2$-$C_4$-Dialkyl-$C_1$-$C_4$-dialkoxyzinnverbindungen,
d) der $C_3$-$C_4$-Tetraalkylzirkonate,
e) der $C_2$-$C_{18}$-Trialkylvanadylate oder
f) der Gemische aus Germaniumdioxid oder Titandioxid mit mindestens einem der Gruppe a) bis e) im Gewichtsverhältnis 1:3 bis 3:1 eingesetzt wird, wobei der Reinheitsgrad alle für die Umesterung eingesetzten Ausgangsmaterialien > 99,1 Gew.-% sein soll.

2. Verfahren gemäss Anspruch 1, dadurch gekennzeichnet, dass das Molverhältnis von Diarylcarbonat zu Phosphonsäurediarylester zwischen 15 zu 85 und 85 zu 15 liegt.

3. Verfahren zur Herstellung von aromatischen thermoplastischen Polyphosphonatocarbonaten gemäss den Ansprüchen 1 und 2, dadurch gekennzeichnet, dass die Phosphonsäurediarylester/Diarylcarbonat-Gemische mit Diphenolen in Gegenwart von 0,05 bis 3 Mol-%, bezogen auf 100 Mol-% Phosphonsäurediarylester/Diarylcarbonat-Gemisch, an Triarylphosphaten und/oder in Gegenwart von 0,05 bis 3 Mol-%, bezogen auf 100 Mol-% Diphenole an Verbindungen mit 3 oder mehr als 3 phenolischen Hydroxygruppen umgesetzt werden, mit der Massgabe, dass die Summe aus verzweigenden Triarylphosphaten und verzweigenden phenolischen Verbindungen maximal 3 Mol-% beträgt.

**Revendications**

1. Procédé pour la fabrication de polyphosphonatocarbonates thermoplastiques aromatiques d'un poids moléculaire moyen (moyenne en nombre $\overline{M}_n$) de 11 000 à 200 000 par transestérification d'au moins un phosphonate de diaryle et de carbonates de diaryle avec au moins diphénol en masse fondue à des températures comprises entre 80 et 340°C en atmosphère exempte d'oxygène sous la pression atmosphérique ou sous pression réduite entre 800 mbar et 0,133 mbar — le rapport molaire du carbonate de diaryle au phosphonate de diaryle étant compris entre 5 : 95 et 95 : 5 et le rapport molaire des diphénols à la somme du carbonate de diaryle et du phosphonate de diaryle étant compris entre 0,91 et 0,99 —, caractérisé en ce que l'on utilise comme catalyseur de transestérification au moins un composé choisi parmi

a) les titanates de tétraalkyles en $C_1$-$C_{18}$,
b) les oxydes de di(alkyl en $C_2$-$C_4$)étain,
c) les composés de di(alkyl en $C_2$-$C_4$)di(alcoxy en $C^1$-$C_4$)étain,
d) les zirconates de tétraalkyles en $C_3$-$C_{18}$,
e) les vanadylates de trialkyles en $C_2$-$C_{18}$ ou
f) les mélanges de dioxyde de germanium ou de dioxyde de titane avec au moins un composé des groupes a) à e) dans un rapport de 1 : 3 à 3 : 1 en poids, en quantités comprises entre $10^{-7}$ et $2,10^{-2}$ mol %,

par mol de diphénols utilisés, le degré de pureté de toutes les matières premières utilisées pour la transestérification devant être > 99,1% en poids.

2. Procédé selon la revendication 1, caractérisé en ce que le rapport molaire du carbonate de diaryle au phosphonate de diaryle est compris entre 15 : 85 et 85 : 15.

3. Procédé pour la fabrication de polyphosphonatocarbonates thermoplastiques aromatiques selon les revendications 1 et 2, caractérisé en ce que l'on fait réagir les mélanges phosphonate de diaryle/carbonate de diaryle avec des diphénols en présence de 0,5 à 3 mol % de phosphates de triaryles, par rapport à 100 mol % de mélange phosphonate de diaryle/carbonate de diaryle et/ou en présence de 0,05 à 3 mol % de composés ayant 3 ou plus de 3 groupes hydroxy phénoliques, par rapport à 100 mol % de diphénols, avec la condition que la somme des phosphates de triaryles de ramification et des composés phénoliques de ramification est de 3 mol % au maximum.

**Claims**

1. Process for the preparation of aromatic thermoplastic polyphosphonatocarbonates with average molecular weights (number-average $\overline{M}_n$) of 11,000 to 200,000 by trans-esterification of at least one phosphonic acid diaryl ester and diaryl carbonates with at least one diphenol in the melt, at temperatures between 80°C and 340°C, and in an oxygen-free gas atmosphere, under atmospheric pressure or reduced pressure between 800 mbar and 0.133 mbar, — the molar ratio of diaryl carbonate to phosphonic acid diaryl ester being between 5 : 95 and 95 : 5 and the molar ratio of the mols of diphenols to the sum of the mols of diaryl carbonate and phosphonic acid diaryl ester being between 0.91 : 1 and 0.99 : 1, characterised in that the trans-esterification catalyst used, in amounts of between $10^{-7}$ and $2.10^{-2}$ mol %, per mol of diphenols employed, is at least one catalyst from the group comprising

a) tetra-$C_1$-$C_{18}$-alkyl titanates,
b) di-$C_2$-$C_4$-alkyl-tin oxides,
c) di-$C_2$-$C_4$-alkyl-di-$C_1$-$C_4$-alkoxy-tin compounds,
d) tetra-$C_3$-$C_{18}$-alkyl zirconates and
e) tri-$C_2$-$C_{18}$-alkyl vanadylates or
f) mixtures of germanium dioxide or titanium dioxide and at least one catalyst from the groups a) to e) in a weight ratio of 1 : 3 to 3 : 1, wherein the degree of purity of all the starting materials employed for the trans-esterification should be > 99.1% by weight.

2. Process according to claim 1, characterised in that the molar ratio of diaryl carbonate to phosphonic acid diaryl ester is between 15 : 85 and 85 : 15.

3. Process for the preparation of aromatic thermoplastic polyphosphonatocarbonates according to claims 1 and 2, characterised in that the phosphonic acid diaryl ester/diaryl carbonate mixtures are reacted with diphenols in the presence of 0.05 to 3 mol %, based on 100 mol % of phosphonic acid diaryl ester/diaryl carbonate mixture, of triaryl phosphates and/or in the presence of 0.05 to 3 mol %, based on 100 mol % of diphenols, of compounds with 3 or more than 3 phenolic hydroxyl groups, with the proviso that the sum of branching triaryl phosphates and branching phenolic compounds is at most 3 mol %.